# EUROPEAN PATENT SPECIFICATION

(11) **EP 1 091 672 B1**
(45) Date of publication and mention of the grant of the patent: **07.06.2006**
(21) Application number: 99929116.4
(22) Date of filing: 30.06.1999
(51) Int. Cl.: A47J 37/04, A47J 36/38

(54) **AN APPARATUS FOR HEAT TREATMENT OF A FOOD PRODUCT**
KOCHGERÄT FÜR NAHRUNGSMITTEL
APPAREIL DE CUISSON DE PRODUITS ALIMENTAIRES

(30) Priority: 01.07.1998 DK 98249; 05.03.1999 DK 99315
(43) Date of publication of application: 18.04.2001
(73) Proprietor: FKI Fast Food Teknik A/S, 5690 Tommerup (DK)
(72) Inventor: POULSEN, Ingvard, DK-5690 Tommerup (DK)
(74) Representative: Holme, Edvard
(86) International application number: PCT/DK1999/000373
(87) International publication number: WO 2000/001285

(56) References cited:
- EP-A1- 0 885 583
- EP-A2- 0 298 000
- DK-U3- 199 800 229
- US-A- 5 044 264
- US-A- 5 588 354
- US-A- 5 690 018

## Description

The invention relates to an apparatus for heat treatment of a food product, comprising: a housing with a built-in heat treater in form of two belt conveyors having endless conveyor belts with heated belt parts arranged to abut on each their side of the food product and convey this product from an entrance to an exit in the heat treater, and that in the housing furthermore an air cleaner is placed for cleaning the air which is to be discharged from the apparatus of cooking odours and smells that might be given off during the heat treatment process, and that the active belt part of each of the two conveyor belts are supported along the back by a heat-conducting support plate which in operations is heated by a heating element.

In many cases, the quality of a food product is improved when it is subjected to heat treatment. Thereby, the product gains a more appetising and eatable texture and the taste is improved. The heat treatment furthermore serves for destroying deleterious micro organisms that might be in the food product.

Throughout the ages, frying, grilling and roasting have been popular methods for heat treatment of especially meat which, during the cooking process, is heated to relatively high temperatures whereby the texture and chemical composition of the meat are advantageously altered.

The cooking process can take place in many different ways of which mention, by way of example, can be made of cooking over open fire, grilling, roasting in an oven, cooking by means of radiant heating, and frying by means of contact heat on a frying pan or plate.

The last method is suited for frying small meat products, such as steaks, chops, and hamburgers. But the frying time is relatively long, and the process is labour-intensive as it is necessary to turn the product frequently during frying. Furthermore, the process engages the undivided attention of the operator as he has to monitor the frying to ensure that the product is fried as desired, that is not too much and not too little.

In order to remedy these disadvantages, more or less automatic processes have been developed where the meat product is conveyed on a belt conveyor while simultaneously being fried. By adapting the rate of the conveyor belt and the thermal output to the character of the meat product, products of a uniform high quality can repeatedly be fried with a moderate performance.

As heat source in these processes, e.g. radiant heat, contact heat, or a combination of both can be used.

In some cases, the conveyor belts used are made of wire netting which however has the disadvantageous shortcomings that they allow grease separated in fluid form during frying to drip down onto the heating elements at the risk of the grease thereby igniting.

In order to among other things eliminate this risk, Teflon-coated conveyor belts have been used in other cases. Such an apparatus is for instance disclosed in US Patent No. 5,588,354. This apparatus comprises a heat treater which operates with two opposite belt conveyors with endless conveyor belts which by means of contact heat fry the product simultaneously on two sides whereby the advantage is obtained in that the cooking time and the work performed are reduced substantially.

The short cooking time is an appreciated advantage in burger bars and other fast food restaurants where the ready, hot food product is often wanted as quickly as possible after ordering.

In operation, each conveyor belt of the known belt conveyor runs about two revolving rollers while the food product is conveyed from an entrance to an exit in the heat treater. During this, the food product is affected simultaneously on two opposed sides by contact heat from the active belt parts of the two conveyor belts, the belt parts are themselves heated by radiant heat panels directed at the back of the belt parts.

In this construction, the active belt parts are freely stretched between the corresponding rollers. The belts must therefore be strong and have a thickness that is great enough to match this strongness in order to be able to produce a sufficient contact pressure towards the food product to enable the hot belt parts to transfer the heat required to fry the product.

Nevertheless, the food product is subjected to greatly varying thermal stresses on its way from the entrance to the exit of the heat treater. The contact pressure and thereby the thermal stress will be greatest at the revolving rollers while the thermal stress will be smallest on the middle of the active belt parts which, due to the missing support, bend out influenced by the reaction load of the food product or products which is/are being treated at a given moment.

These circumstances mean that it is difficult to control the frying process and to cook especially loosely formed meat products such as hamburgers in a uniform and reliable way.

To this must be added that the heat transfer through the active belt parts is hampered by their great thickness resulting in a reduced heat economy.

The common denominator of the above processes and apparatuses for heat treatment of a food product is that the usually pestering, incident smell and cooking odour given off by the product during the heat treatment process must be sucked out by means of relatively expensive mechanical aids to subsequently be discharged into the open air.

However, such aids are frequently not installed or are not wanted in many serving places which otherwise advantageously could use fully or semi-automatic processes for heat treatment of food products.

As an example of such serving places, there can be mentioned restaurants, cafeterias, filling stations, and also chain stores and supermarkets where hot dishes are served.

The object of the invention is to provide an apparatus of the kind mentioned in the opening paragraph, which in a quicker and more reliable way and with a better heat economy than known so far is able to fully or semi-automatically heat treat food products in such a way that these products are given a desiredly uniform, high quality without polluting the surrounding environment with cooking odours and smells that might be given off during the heat treatment process.

The novel and unique features according to the invention, whereby this is achieved, is the fact that the housing by means of a partition wall is divided into a heat treatment chamber containing the heat treater and an air cleaner chamber containing the air cleaner, and that the air cleaner comprises one cooler placed after the grease filter, at least one subsequent particle filter, and at least one active coal filter placed after this particle filter.

During the passage from the entrance to the exit of the heat treater, the food product receives heat from the hot belt parts that for this purpose abut against the product with an adequate pressure. Thereby, the product is subjected to a heat treatment, which typically can be frying of a meat product. The air cleaner removes cooking odours and smells from the heat treatment air which without further treatment, can be discharged into the room in which the apparatus is placed without pestering the environment or the persons present. The apparatus can therefore immediately be placed and used in serving places that do not have separate mechanical devices for sucking out the polluted air and discharge it into the open air.

In an advantageous embodiment, there can in the housing be placed a partition wall for dividing the housing into a heat treatment chamber containing the heat treater and an air cleaning chamber containing the air cleaner. When the apparatus furthermore comprises a ventilator for via a grease filter driving the air polluted with cooking odours and smells in the heat treatment chamber through the air cleaner via a belonging grease filter, an effective cleaning of the air is ensured.

This is due to the fact that in this way the effect of the other means for cleaning the air of the air cleaner are not reduced by greases that otherwise would be deposited on these means.

The other means of the air cleaner for cleaning the polluted heat treatment air can advantageously be a cooler serving for condensing the moisture content of the air and using fresh air as coolant, at least one succeeding filter for filtering off particulate substances from the air, and finally at least one active charcoal filter for removing the smell from the air before it in this cleaned condition finally is discharged into the surrounding environment.

In a preferred embodiment, each of the two active belt parts of the conveyor belt can advantageously be supported along the back by means of a heat-conducting support plate which in operation is heated by a heating element in form of e.g. a plate-shaped, electric heating element which by means of a retaining plate is made to abut against the back of the support plate.

As the distance between the active belt parts now is constant in the total longitudinal extension of the heat treater, the food product is subjected to a uniform thermal stress all the way through the heat treatment process which starts at the entrance of the heat treater and ends at its exit. Therefore, the process can now be controlled so effectively that by particular setting of the heat treater, products of the same high quality are always obtained.

The food products, e.g. hamburgers, can furthermore now advantageously be calibrated to the same desired thickness between the rigidly supported belt parts.

An additional, considerable advantage consists in that the endless belts, which can be made of Teflon or Teflon-coated belts, of the belt conveyor can be allowed to be very thin whereby the heat easily penetrates the belts and a good heat economy is thereby obtained.

To prevent that redundant air penetrates into the heat treatment chamber from the outside and/or that cooking odours and smells penetrate from this out into the surroundings, the heat treatment chamber can advantageously be defined in relation to the surroundings by means of a front wall and two side walls.

The front wall can then be provided with an entrance opening for the untreated food product and an exit opening for the heat treated food product, the two openings being closable by means of each their door.

The lowest part of the partition wall between the heat treatment chamber and the air cleaning chamber can furthermore be formed as a chute extending down to the lower edge of the exit opening so that the food products can slide as they in finished heat treated condition leave the belt conveyor of the heat treater. This arrangement of the partition wall facilitates the operator's work of removing the finished food products from the housing of the apparatus.

Each conveyor belt of the belt conveyor usually runs about two revolving rollers of which one functions as a spring-loaded tension roller which by means of a tightening device can be displaced forward and backwards in order to tighten and slacken the belt, respectively.

In the operation of the apparatus, the conveyor belts are fouled gradually by grease and other substances separated from the products that are heat treated by e.g. frying. For hygienic reasons, the belts must frequently be taken out of the heat treater to be cleaned and afterwards the cleaned belts must be remounted on the heat treater. These operations are facilitated when there is a side opening in the side wall of the housing and said side opening allows for passage of the belts.

A door can advantageously belong to this side opening for keeping the opening shut in operation.

The invention will be explained in greater detail below, describing only exemplary embodiments with reference to the drawing, in which
Fig. 1 is a perspective view obliquely from above of an apparatus according to the invention,
Fig. 2 is a diagrammatic perspective view obliquely from above of the interior parts of the apparatus from another angle,
Fig. 3 is on a larger scale a plan view from above of a heat treater for the apparatus shown in fig. 1 and 2, and
Fig. 4 is a sectional view taken along the line of IV - IV of fig. 3.

In the following, the invention is described on the exemplary assumption that the apparatus is used for cooking the meat that forms an integral part of a hamburger. It is usually a question of a portion of minced meat in the shape of a slice which in the following is referred to as a hamburger.

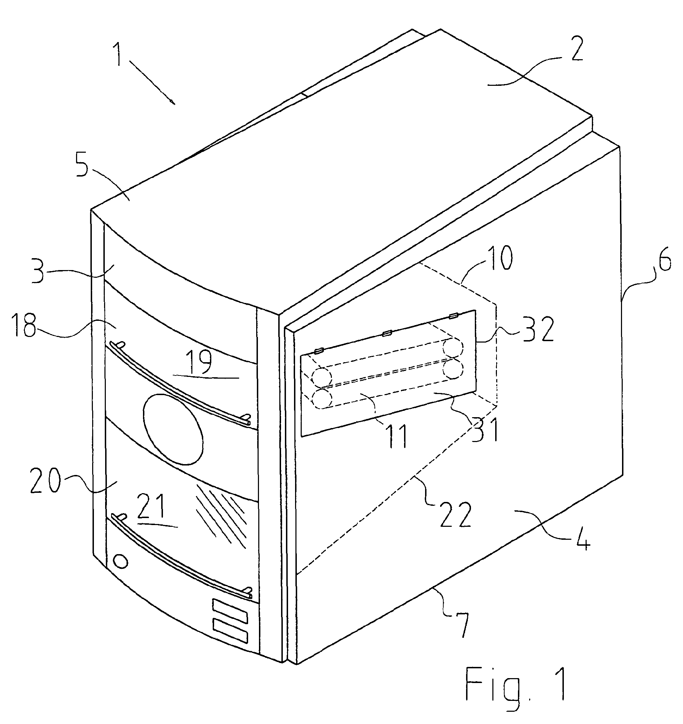

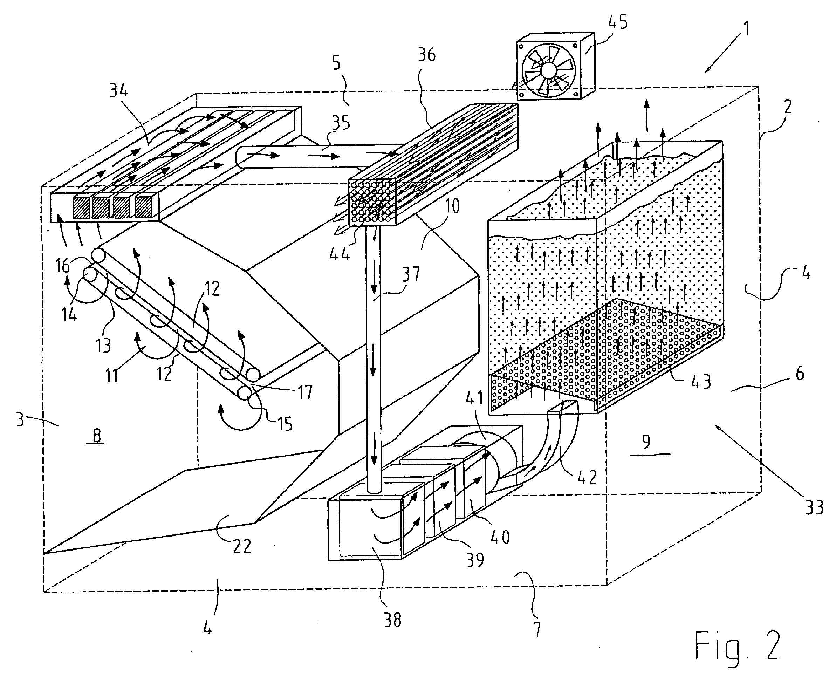

Fig. 1 and 2 show an apparatus 1 according to the invention. The apparatus has a housing 2 with a front wall 3, side walls 4, a top wall 5, a back wall 6, and a bottom wall 7.

The housing is divided into a cooking chamber 8 and an air cleaning chamber 9 by means of a partition wall 10.

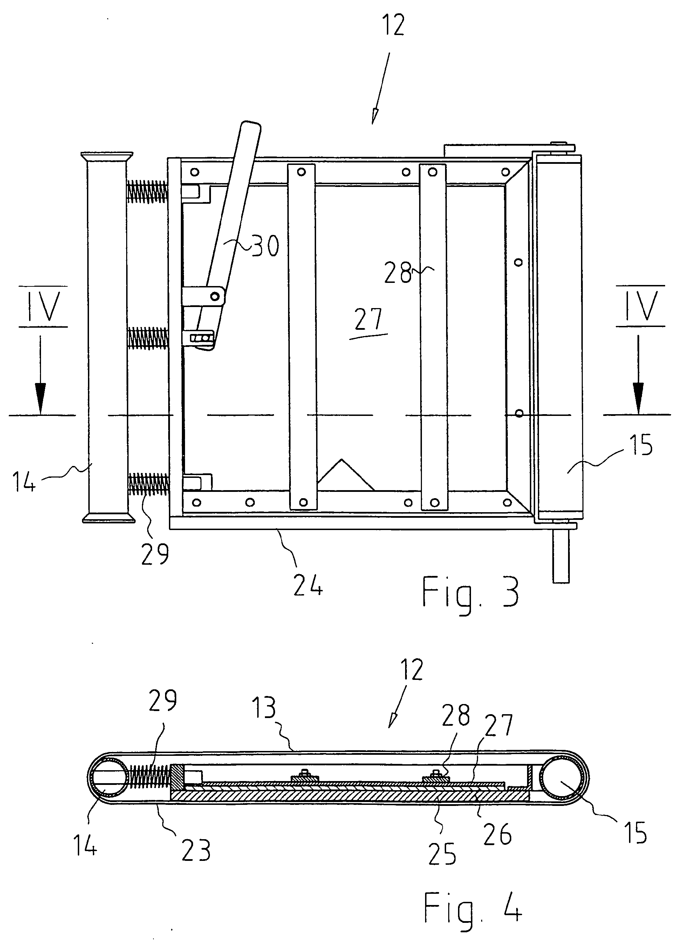

In the cooking chamber is placed a fryer 11 for frying the hamburgers (not shown). The fryer, which is diagrammatically shown in fig. 2 and in detail in fig. 3 and 4, consists of two opposite belt conveyors 12 with conveyor belts 13 which in operation run about each their revolving roller 14 and driven roller 15 driven by a motor, not shown.

The fryer 11 has an entrance 16 and an exit 17, and the housing has an entrance opening 18 closable with an entrance door 19 and an exit opening 20 closable with an exit door 21 (fig. 1).

The partition wall 10 which defines the cooking chamber 8 in relation to the air cleaning chamber 9 is extending polygonally or curvedly from an area at the upper edge of the entrance opening 18 to an area at the lower edge of the exit opening 20. The lower part of the partition wall 10 is formed as a chute 22.

When a hamburger has been ordered, the operator (not shown) opens the entrance door 19 and introduces e.g. a frozen hamburger (not shown) via the entrance opening 18 into the entrance of the fryer 11 after which the two conveyor belts 13 of the fryer convey the hamburger to the exit 17 of the fryer by means of the opposite conveyor belt parts 23 which abut against each their side of the hamburger.

As will be described in detail in the following, the two belt parts 23 are in operation heated to a frying temperature, and the hamburger is therefore fried to the desired quality during passage between the entrance 16 and the exit 17 of the fryer 11.

When the fried hamburger leaves the exit of the fryer, it slides down towards the exit opening 20 of the cooking chamber 8 on the chute-shaped lower part of the partition wall 10. From there, the operator can easily get the hot, fried hamburger merely by opening the exit door 21 and place it in a hamburger roll, and it is ready to be served.

The cooking time for a single hamburger will typically be between 90 and 120 sec. with a maximum consumption of power of about 4,6 kW. The average time spent will however be less as the fryer is able to cook a large number of hamburgers simultaneously which can lie side by side and/or after each other while passing through the fryer.

The operator can also leave a number of fried hamburgers in the heat chamber for immediate serving as in operation the heat treater heat the heat chamber so that the hamburgers can be kept sufficiently warm for some time.

Fig. 3 and 4 show in detail how a belt conveyor 12 is built up on a frame 24 which in a manner not shown is fastened in the housing 2.

As part of the frame is a support plate 25 which supports the active belt parts 23 of the conveyor belt 13 in the area between the revolving roller 14 and the driven roller 15. The support plate is made of a material possessing good thermal conductivity, e.g. aluminium, and it is, at least on the side facing the belt part 23, provided with a smooth surface to thereby provide a small coefficient of friction between the support plate and the conveyor belt which in operation slides along the smooth surface of the support plate.

The conveyor belt is made of Teflon or is coated with Teflon on both sides. Teflon reduces the coefficient of friction between the support plate and the conveyor belt further, and Teflon can furthermore stand being heated to high frying temperatures. A foodstuff such as meat is furthermore not likely to stick to a Teflon-coated surface.

The support plate 25 secures the active belt part from bending out under the pressure of the hamburgers which during frying are conveyed between the opposite belt parts 23 of the two belt conveyors 12. Thereby, the distance between these belt parts is now kept constant during the entire frying process which now can pass off safely so that there continuously can be produced hamburgers of the same high frying quality and with the same thickness.

In a variation of this embodiment, the belt conveyors can be placed in relation to each other so that the distance between their belt parts 23 is reduced a little in the direction of conveyance. Thereby, it is possible to calibrate the thickness of the hamburgers and compensate for the decrease in meat during frying.

The presence of the support plate 25 furthermore allows for the use of relatively thin belts which are inexpensive to buy and which easily allow the heat to pass from one side of the belt to the other so that a good heat economy is obtained.

In the case shown in fig. 4, the heat is generated by a plate-shaped, electric heating element 26 which by means of a retaining plate 27 and clamping parts 28 is made to abut against the back of the support plate 25. The generated heat is transferred via the heat-conducting support plate 25 to the active belt part 23 of the conveyor belt 13.

It must be noted that any other kind of heat source than the mentioned one, for example radiant panels, can naturally be used within the scope of the invention.

Irrespective of Teflon's good resistance to burning, the conveyor belt 13 is polluted by grease and other substances from the hamburgers during frying. Therefore, the belt must frequently be cleaned.

In mounted condition, the conveyor belt 13 is tightened up by compression springs 29 that are compressed against the displaceable revolving roller 14 which thus functions as tension roller. The tension roller 14 can by means of a hand lever 30 be pulled back while overcoming the compressive force of the springs 29. Thereby, the conveyor belt is slackened. The hand lever can by means of a clamping device not shown be kept in the slackening position.

When the tension roller is in its slackening position, the polluted conveyor belt can now easily be removed in a direction transversely to the belt conveyor. For this purpose, there is, in the side wall 4 of the housing in an area opposite the belt conveyors 13, formed a side opening 31 permitting passage in and out of the housing 2 of the conveyor belts.

The cleaned conveyor belt or a new one is mounted by means of the same operations but in reverse order. When the conveyor belts are mounted, the side opening 13 is closed by a side door 32.

As indicated with the arrows, the hamburgers give off, during the frying process, a pestering, incident cooking odour and smell that according to the invention are removed by means of an air cleaner 33 before discharge to the surrounding environment.

The air cleaner consists of, seen in order, a grease filter 34 which via a first duct 35 is connected to a cooler 36 which via a second duct 37 is connected to a condensation container 38 which in its turn is connected to a coarse filter 39 and subsequently a fine filter 40 which via a fan 41 and a third duct 42 is connected to an active charcoal filter 43.

The fan 41 serves in operation for driving the air which is polluted in the cooking chamber 8 through the air cleaner 33 in the direction indicated by the arrows before the air in cleaned condition is discharged into the surrounding environment.

The polluted air first passes the grease filter 34 which catches the grease content of the air that otherwise would have a damaging effect on or reduce the effect of the subsequent components of the air cleaner.

In the cooler 36, the air is cooled whereby a considerable part of the moisture content of the air is condensed and runs in fluid form down into the condensation container 38 via the second duct 37.

The cooler 36 is in this case formed as a pipe heat exchanger with cooling pipes 44. The polluted air is flowing along the outer side of the pipes while a fan 45 is sending a fresh airflow through the cooling pipes.

The air that was dehumidified in the cooler 36 flows via the second channel 37 and the condensation container 38 further through the coarse filter 39 where coarse particulate substances are removed from the air.

The air then flows through the fine filter 40 where fine particulate substances are removed.

The fan 42 now sends the air via the third channel 42 through the active charcoal filter 34 which serves for removing the smells in the air.

Finally, the now cleaned and non-smelling air is discharged into the surrounding environment without in any way being pestering or incident to the persons present.

The apparatus according to the invention can therefore immediately be installed and used in serving places without mechanical suction.

The invention is described above on the assumption that the apparatus is used for cooking hamburgers.

It will readily be understood that the apparatus within the scope of the invention can be used just as advantageously for heat treating many other kinds of vegetable and animal food products, such as e.g. hot dog rolls, sausages and chicken schnitzels.

## Claims

1. An apparatus (1) for heat treatment of a food product, comprising a housing (2) with a built-in heat treater (11) in form of two belt conveyors (12) having endless conveyor belts (13) with heated belt parts (23) arranged to abut against each their side of the food product and conveying this from an entrance (16) to an exit (17) in the heat treater (11), and that in the housing (2) furthermore an air cleaner (33) is placed for cleaning the air which is to be discharged from the apparatus (1) of cooking odours and smells that might be given off during the heat treatment process, and that the active belt part (23) of each of the two conveyor belts (13) are supported along the back by a heat-conducting support plate (25) which in operation is heated by a heating element (26), **characterised in that** the housing (2) by means of a partition wall (10) is divided into a heat treatment chamber (8) containing the heat treater (11) and an air cleaning chamber (9) containing the air cleaner (33) and that the air cleaner (33) comprises one cooler (36) placed after the grease filter (34), at least one subsequent particle filter (39;40), and at least one active charcoal filter (43) placed after this particle filter.

2. An apparatus (1) according to claim 1, **characterised in that** the heating element (26) is a plate-shaped, electric heating element which by means of a retaining plate (27) is made to abut against the back of the support plate (25).

3. An apparatus (1) according to claim 1 or 2, **characterised in that** the heat treatment chamber (9) communicates with the air cleaner (33) via a grease filter (34) that is part of this air cleaner, and that the apparatus (1) furthermore comprises at least one fan (41) for in operation driving an airflow through the heat treatment chamber (8) and the air cleaner (33).

4. An apparatus (1) according to claim 4, **characterised in that** the cooler (36) consists of a heat exchanger adapted to use fresh air as coolant.

5. An apparatus according to any of the claims 1-4, **characterised in that** the heat treatment chamber (8) has a front wall (3) with a closable entrance opening (18) for the untreated food product and a closable exit opening (20) for the heat treated food product.

6. An apparatus (1) according to any of the claims 1 - 5. **characterised in that** the partition wall (10) of the housing (2) is extending from an area at or above the entrance opening (18) to the lower edge of the exit opening (20), and that a lower part of the partition wall (10) is formed as a chute (22) inclining down towards the exit opening (20).

7. An apparatus (1) according to any of the claims 1 - 6, **characterised in that** each conveyor belt (13) is made of Teflon or a heat-conducting material coated with Teflon on at least the side facing the food product.

8. An apparatus (1) according to the claims 1 - 7, and in which each conveyor belt (13) in operation runs about two revolving rollers (14;15) mounted on a, in relation to the housing (2), stationary frame (24), and at least one of these revolving rollers (14) is formed as a tension roller (14) which by means of a tightening device can be displaced between a first position in which the conveyor belt (13) is tightened and a second position in which the conveyor belt (13) is slackened, **characterised in that** in an area of the side wall (4) of the housing (2) opposite the belt conveyor (12), there is a preferably closable side opening (31) for allowing passage of the conveyor belt (13) when this belt in the second position of the tension roller (14) is to be removed from or mounted on the revolving roller (14;15) of the respective belt conveyor (12).

## Patentansprüche

1. Ein Apparat (1) zur Wärmebehandlung eines Lebensmittelprodukts, mit einem Gehäuse (2) mit einem eingebauten Wärmebehandler (11) in Form von zwei Gurtförderern (12) mit endlosen Fördergurten (13), mit erwärmten Gurtabschnitten (23), die angeordnet sind, um gegen jede der Seiten des Lebensmittelprodukts anzustoßen und dieses von einem Eingang (16) zu einem Ausgang (17) in dem Wärmebehandler (11) zu fördern, wobei in dem Gehäuse (2) weiter ein Luftreiniger (33) angeordnet ist zum Reinigen der Luft, die aus der Vorrichtung abzuführen ist, wie Kochgerüchen und -dünsten, die während des Wärmebehandlungsvorgangs abgegeben werden können und wobei der aktive Gurtabschnitt (23) jedes der beiden Fördergurte (13) entlang seiner Rückseite von einer wärmeleitenden Stützplatte (25) gestützt wird, die bei dem Betrieb durch ein Heizelement (26) erwärt wird,
**dadurch gekennzeichnet,**
**dass** das Gehäuse (2) mittels einer Trennwand (10) in eine Wärmebehandlungskammer (8), die einen Wärmebehandler (11) aufweist, und eine Luftreinigungskammer (9), die den Luftreiniger (33) aufweist, geteilt wird, das die Wärmebehandlungskammer (8) mit dem Luftreiniger (33) über einen Fettfilter (34), und dass der Luftreiniger (33) einen Kühler (36) aufweist, der hinter dem Fettfilter (34) angeordnet ist, wenigstens einen nachfolgenden Partikelfilter (39; 40) und wenigstens einen aktiven Kohlefilter (43), der hinter dem Partikelfilter angeordnet ist, aufweist.

2. Ein Apparat (1) nach Anspruch 1, **dadurch gekennzeichnet, dass** das Wärmeelement (26) ein plattenförmiges, elektrisches Wärmeelement ist, das mittels einer Rückhalteplatte (27) ausgebildet ist, um gegen die Rückseite der Stützplatte (25) anzustoßen.

3. Ein Apparat (1) nach Anspruch 1 oder 2, **dadurch gekennzeichnet, dass** die Wärmebehandlungskammer (8) mit dem Luftreiniger (33) über ein Fettfilter (34) kommuniziert, das einen Teil des Luftreinigers ist, und dass der Apparat (1) weiter wenigstens ein Gebläse (41) aufweist, das bei Betrieb einen Luftstrom durch die Wärmebehandlungskammer (8) und den Luftreiniger (33) treibt.

4. Eine Vorrichtung nach Anspruch 4, **dadurch gekennzeichnet, dass** der Kühler (36) aus einem Wärmetauscher besteht, der zur Nutzung von Frischluft als Kühlmittel eingerichtet ist.

5. Eine Vorrichtung nach einem der Ansprüche 1-4, **dadurch gekennzeichnet, dass** die Wärmebehandlungskammer (8) eine Vorderwand (3) mit einer verschließbaren Eingangsöffnung (18) für das nicht behandelte Lebensmittelprodukt und eine geschlossene Ausgangsöffnung (20) für das wärmebehandelte Lebensmittelprodukt hat.

6. Ein Apparat (1) nach einem der Ansprüche 1 - 5, **dadurch gekennzeichnet, dass** die Trennwand (10) des Gehäuses (2) sich von einem Bereich an oder oberhalb der Eingangsöffnung (18) zu dem unteren Rand der Ausgangsöffnung (20) erstreckt, und dass eine untere Wand der Trennwand (10) als eine Schütte (22) ausgebildet ist, die sich nach unten in Richtung auf die Ausgangsöffnung (20) neigt.

7. Ein Apparat (1) nach einem der Ansprüche 1-6, **dadurch gekennzeichnet, dass** jeder Fördergurt (13) aus Teflon besteht oder aber aus einem wärmeleitfähigen Material, das wenigstens auf der zu dem Lebensmittelprodukt weisenden Seite mit Teflon beschichtet ist.

8. Ein Apparat (1) nach einem der Ansprüche 1 - 7, bei dem jeder Fördergurt (13) bei Betrieb um zwei sich drehende Walzen (14; 15) läuft, die auf einem in Beziehung zu dem Gehäuse (2) ortsfesten Rahmen (24) montiert sind, und wenigstens ein der drehenden Walzen (14) als Spannwalzen (14) ausgebildet ist, die mittels einer Spanneinrichtung zwischen einer ersten Position, in der der Fördergurt (13) angezogen wird und einer zweiten Position, in der der Fördergurt (13) gelockert wird, verlagert werden kann, **dadurch gekennzeichnet, dass** ein Bereich der Seitenwand (4) des Gehäuses (2) dem Gurtförderer (12) gegenüberliegend an einer vorzugsweise verschließbaren Seitenöffnung (31) angeordnet ist, um die Passage des Fördergurts (13) zu erlauben, wenn dieser Gurt in der zweiten Position der Spannrollen (14) zu entfernen ist oder zu befestigen ist von bzw. auf den sich drehenden Rollen (14; 15) des jeweiligen Gurtförderers (12).

## Revendications

1. Appareil (1) pour le traitement thermique d'un produit alimentaire comprenant une enveloppe (2) dans laquelle est incorporé un dispositif de traitement thermique (11) formé de deux transporteurs à courroie (12) ayant des courroies transporteuses sans fin (13), qui présentent des parties de courroies chauffées (23) arrangées pour s'appuyer chacune contre son côté respectif du produit alimentaire et qui transportent ce dernier d'une entrée (16) à une sortie (17) dans le dispositif de traitement thermique (11) et un épurateur d'air (33), étant placé en supplément dans l'enveloppe (2) destiné à épurer l'air qui doit être rejeté hors de l'appareil (1) des odeurs et senteurs de cuisson qui pourraient être dégagées pendant le processus de traitement thermique, et que la partie de courroie active (23) de chacune des deux courroies transporteuses (13) est supportée le long de son dos par une plaque de support conductrice de la chaleur (25) qui est chauffée par un élément chauffant (26) pendant le fonctionnement, **caractérisé en ce que** l'enveloppe (2) est divisée au moyen d'une paroi de séparation (10) en une chambre de traitement thermique (8) qui contient le dispositif de traitement thermique (11) et une chambre d'épuration d'air (9) qui contient l'épurateur d'air (33) et **en ce que** l'épurateur d'air (33) comprend un refroidisseur (36) placé en aval du filtre à graisse (34), au moins un filtre à particules (39 ; 40) qui y fait suite, et au moins un filtre à charbon actif (43) placé après ce filtre à particules.

2. Appareil (1) selon la revendication 1 ou 2, **caractérisé en ce que** l'élément chauffant (26) est un élément chauffant électrique en forme de plaque qui est appuyé contre le dos de la plaque de support (25) au moyen d'une plaque de retenue (27).

3. Appareil (1) selon la revendication 1 ou 2, **caractérisé en ce que** la chambre de traitement thermique (9) communique avec l'épurateur d'air (33) à travers un filtre à graisses (34) qui fait partie de cet épurateur d'air, et **en ce que** l'appareil (1) comprend en outre au moins un ventilateur (41) destiné à faire passer un flux d'air à travers la chambre de traitement thermique (8) et à travers l'épurateur d'air (33) pendant le fonctionnement.

4. Appareil (1) selon la revendication 1, **caractérisé en ce que** le refroidisseur (36) est constitué par un échangeur de chaleur adapté pour utiliser de l'air neuf comme réfrigérant.

5. Appareil selon l'une quelconque des revendications 1 à 4, **caractérisé en ce que** la chambre de traitement thermique (8) possède une paroi avant (3) présentant une ouverture d'entrée obturable (18) pour le produit alimentaire non traité et une ouverture de sortie obturable (20) pour le produit alimentaire traité par la chaleur.

6. Appareil (1) selon une quelconque des revendications 1-5, **caractérisé en ce que** la paroi de séparation (10) de l'enveloppe (2) s'étend d'une région située au niveau ou au-dessus de l'ouverture d'entrée (18) jusqu'au bord inférieur de l'ouverture de sortie (20) et **en ce qu'**une partie inférieure de la paroi de séparation (10) est conformée en une goulotte (22) inclinée vers le bas, vers l'ouverture de sortie (20).

7. Appareil (1) selon une quelconque des revendications 1-6, **caractérisé en ce que** chaque courroie transporteuse (13) est faite de Téflon ou d'une matière conductrice de la chaleur revêtue de Téflon au moins sur le côté en regard du produit alimentaire.

8. Appareil (1) selon les revendications 1-7 et dans lequel, pendant le fonctionnement, chaque courroie transporteuse (13) passe autour de deux rouleaux rotatifs (14 ; 15) montés sur un bâti (24) fixe par rapport à l'enveloppe (2) et au moins l'un de ces rouleaux rotatifs (14) est réalisé sous la forme d'un rouleau de tension (14) qui peut être déplacé au moyen d'un dispositif de tension entre une première position dans laquelle la courroie transporteuse (13) est tendue et une seconde position dans laquelle la courroie transporteuse (13) est détendue, **caractérisé en ce que**, dans une région de la paroi latérale (4) de l'enveloppe (2) qui est à l'opposé du transporteur à courroies (12), se trouve une ouverture latérale (31), de préférence obturable, destinée à donner passage à la courroie transporteuse (13) lorsque cette courroie, dans la seconde position du rouleau de tension (14), doit être démontée du rouleau rotatif (14 ; 15) du transporteur à courroies respectif (12), ou montée sur ce rouleau rotatif.
